# EUROPEAN PATENT SPECIFICATION

(11) **EP 3 844 120 B1**
(45) Date of publication and mention of the grant of the patent: **13.07.2022**
(21) Application number: 19742074.8
(22) Date of filing: 24.07.2019
(51) Int. Cl.: C03C 21/00, C03C 23/00

(54) **CHEMICALLY STRENGTHENED GLASS SUBSTRATE WITH REDUCED INVADING ION SURFACE CONCENTRATION AND METHOD FOR MAKING THE SAME**
CHEMISCH GEHÄRTETES GLASSUBSTRAT MIT REDUZIERTER INVASIVER IONENOBERFLÄCHENKONZENTRATION UND VERFAHREN ZUR HERSTELLUNG DAVON
SUBSTRAT DE VERRE RENFORCÉ CHIMIQUEMENT À CONCENTRATION DE SURFACE D'IONS ENVAHISSANTS RÉDUITE ET SON PROCÉDÉ DE FABRICATION

(30) Priority: 28.08.2018 EP 18191178
(43) Date of publication of application: 07.07.2021
(73) Proprietor: AGC Glass Europe, 1348 Louvain-La-Neuve (BE); AGC Glass Company North America, Alpharetta GA 30022-1167 (US); AGC Vidros do Brasil Ltda, CEP 12523-671 Guaratinguetá São Paulo (BR); AGC Inc., Chiyoda-ku Tokyo 100-8405 (JP)
(72) Inventor: NAVET, Benjamine, 1348 Louvain-La-Neuve (BE); AMORY, Jacques, 5100 Jambes (BE)
(74) Representative: AGC Glass Europe
(86) International application number: PCT/EP2019/069954
(87) International publication number: WO 2020/043398

(56) References cited:
- WO-A1-2017/102345
- WO-A1-2017/178167
- US-A1- 2017 369 989
- PAOLO MAZZOLDI: "Properties of ion implanted glasses", NUCLEAR INSTRUMENTS & METHODS IN PHYSICS RESEARCH., vol. 209-210, 1 May 1983 (1983-05-01), pages 1089-1098, XP055559514, NL ISSN: 0167-5087, DOI: 10.1016/0167-5087(83)90924-9

## Description

### Technical Field

The present invention relates to process for reducing the invading ion concentration in the surface layer of a chemically strengthened glass, in particular by the use of ion implantation. In particular this leads to modified chemically strengthened glass substrates with essentially unmodified surface compressive stress and depth of compressive layer values.

### Background Art

For many years glass has been the material of choice for building and vehicle windows and also for display covers. Glass offers high chemical and mechanical strength and high transparency. Glass is also compatible with any kind of display technology such as LCD, plasma display, OLED as well as with a large range of touch-screen interface technologies. Glass covers are for example used on television screens, smartphones, mobile phones, tablet computers, electronic books, watches, and computer displays. The more recent trend in display technology goes towards both thinner, lighter and larger devices. A similar trend towards larger and lighter windows is also seen in the transportation industry (i.e. automotive, aeronautical). Therefore it has become necessary to manufacture thinner glass sheets that still offer desirable optical properties as well as the necessary mechanical resistance.

One well known technology for strengthening glass is chemical strengthening. In chemical strengthening, an alkali-containing glass substrate is immersed in a heated bath containing a molten alkali salt such as for example KNO₃ at temperatures well below the glass annealing point. An ion exchange between the host alkali ions of the glass and invading alkali ions from the molten salt occurs. If the invading ions are larger in size than the host ions, then the resultant packing of the invading ions in a near-rigid atomic network of glass leads to the development of a stress profile comprising high surface compression and some balancing interior tensile stress depending on the amount of ions exchanged, the depth of ion exchange and glass sheet thickness. Compared to other glass strengthening processes, chemical strengthening has the advantage that it introduces higher surface compression without optical distortion and it can be applied to thin glass sheets, even below 1mm thickness.

Depending on the process parameters of the chemical strengthening process and on the glass substrate, different extents of ion exchange are obtained. The extent of ion exchange, that is the amount of ions exchanged and the depth of the ion exchange layer in the glass substrate, results in stress profiles having a compressive surface stress (CS) between 300 and 1300 MPa with a depth of the compressive layer (DOL) ranging from a few microns to several hundred microns. The overall level of strengthening is determined by the stress profile across the thickness of the glass substrate. In order to obtain high fracture strength a stress profile with high DOL values and high CS values is necessary. A chemically strengthened display cover glass is typically required to have a compressive surface stress (CS) higher than 600 MPa with a depth of the compressive layer (DOL) higher than 12 µm.

Many different glass types can be used in chemical strengthening, they contain an alkali ion, called host ion, having a relatively small ion radius, such as a lithium or sodium ion, that can be exchanged with another ion, called invading ion, having a relatively larger ion radius such as a potassium, rubidium or caesium ion.

Compressive surface stress (CS): the stress that results from extrusion effect on a glass network by glass surface after ion exchange in the glass, as measured by commercially available surface stress meter FSM from Orihara Industrial Co. Ltd. , based on the optical principle.

Depth of ion exchanged layer (DOL): the thickness of the glass surface layer where ion exchange occurs and compressive stress is produced. DOL can be measured by commercially available surface stress meter FSM from Orihara Industrial Co. Ltd. based on the optical principle.

Central tensile stress (CT): the tensile stress that is generated in the interlayer of glass and counteracts the compressive stress that is generated between the upper and lower surfaces of the glass after ion exchange. The CT can be calculated from the measured CS and DOL values.

Once the desired CS and DOL values are reached it is usually not desired to modify the concentration profile of the invading ion in the glass substrate for fear of deteriorating the CS and DOL values. This limits the modification possibilities of chemically strengthened glass. There are however applications where the out-diffusion of potassium in chemically strengthened glass poses a problem. For instance certain transparent conductive oxide TCO coatings require elevated temperatures, for instance above 200°C. At such elevated temperatures, out-diffusion of potassium from chemically strengthened glass into the TCO coating being formed increases its electrical resistivity.

The document WO 2017/178167 A1 describes ion-exchanged glass substrates, which were ion-implanted.

There is therefore a need in the art to reduce the invading ions' surface concentration in chemically strengthened glass, without significant deterioration of its CS and DOL values.

### Summary of invention

An object of this invention as defined in independent claim 1 is to provide a method for reducing the invading ion concentration in the surface layer of a chemically strengthened glass substrate without significantly modifying the initial CS and DOL values.

The present invention's chemical strengthening makes glass mechanically more resistant as the glass surface, up to a depth DOL of at least 6 µm, is set under compressive stress by replacement of part of the smaller alkali host ions by larger invading ions. It was surprisingly found that the implantation of ions having a small diameter in the surface of a chemically strengthened glass substrate up to a depth D of less than 1 µm could be performed on chemically strengthened glass, and thereby the invading ion's concentration is reduced in a surface layer which starts at the surface and reaches down to a depth d, without significantly modifying the initial CS and DOL values. In particular In particular CS and DOL values after ion implantation were not more than 5% lower than the initial CS and DOL values.

Another object of this invention is the use of a such a first chemically strengthened and then ion implanted glass substrate in architectural glazing, automotive glazing, furniture, white goods, shower partitions, screens, displays, structural glazing, barcode scanners, and watches.

### Brief description of drawings

FIG. 1 is a schematic partial representation (not to scale) of an first chemically strengthened, then ion implanted glass substrate according to the present invention.
FIG. 2 shows a depth profile of potassium to silicon SIMS intensity ratio of an glass substrate according to the present invention.

### Description of embodiments

The present invention concerns the use of implanted ions to decrease the invading ion concentration in a surface layer of a chemically strengthened glass, wherein
a. the ions are selected from one or more of the ions of N, H, O, He, Ne, Ar, and Kr,
b. are implanted in the substrate with a dosage comprised between 10¹⁴ ions/cm² and 10¹⁸ ions/cm², and an acceleration voltage comprised between 5 kV and 100 kV.
wherein c. the invading ion is K⁺, and
d. the surface layer starts at the substrate surface and reaches down to a depth d, where 100 nm < d < 900nm.

In particular the present invention concerns the use of implanted ions to decrease the invading ion concentration in a surface layer of a chemically strengthened glass according to any one preceding claim, wherein the invading ion concentration α in the surface layer is not more than 90% of the invading ion concentration β in the substrate at a depth of 1 µm, where 100 nm < d < 900 nm, where the invading ion concentration is expressed as the invading ion to silicon signal intensity ratio in a SIMS profile.

In particular the present invention concerns the use of implanted ions to decrease the invading ion concentration in a surface layer of a chemically strengthened glass according to any one preceding claim, wherein the chemically strengthened glass is soda lime glass or aluminosilicate glass.

The present invention also concerns a chemically strengthened glass substrate comprising a surface layer starting at the substrate surface and reaching down to a depth d, wherein the invading ion concentration in the surface is not more than 90% of the invading ion concentration at a depth of 1 µm, where 100 nm < d < 900 nm, where the invading ion concentration is expressed as the invading ion to silicon signal intensity ratio in a SIMS profile.

A initial chemically strengthened glass substrate in the present invention shows an increased amount of invading ion, such as for example K⁺ up to a depth of at least 10 µm from the substrate surface. Chemical strengthening makes glass mechanically more resistant as the glass surface, up to a depth DOL of at least 6 µm, or even at least 10µm, is set under compressive stress by replacement of part of the smaller alkali host ions, for example Na⁺, by larger invading ions, for example K⁺.

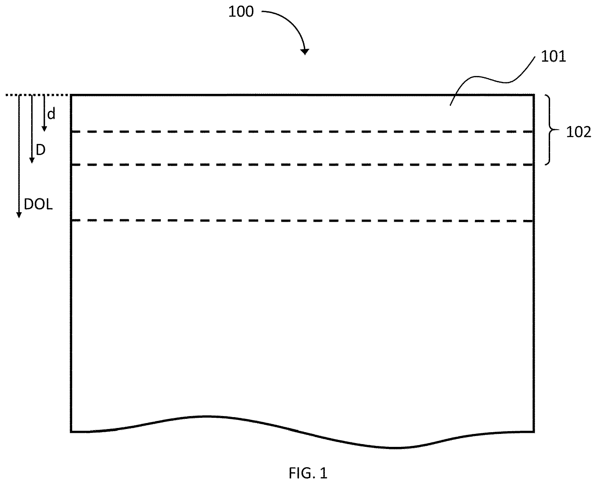

According to the present invention single charge and/or multicharge ions are implanted up to an implantation depth D of up to 1 µm. Figure 1 illustrates a is a schematic partial representation (not to scale) of a chemically strengthened, then implanted glass substrate (100) according to the present invention. An implanted layer (102) is thereby formed in the chemically strengthened glass substrate. As indicated on Figure 1, a surface layer (101) is formed, starting at the substrate surface and reaching down to a depth d wherein the concentration of K⁺ is reduced compared to the initial chemically strengthened substrate. The depth d of this surface part-layer is less than the implantation depth D, in particular 100 nm < d < 900nm, more particularly 100 nm < d < 500 nm. According to the present invention the invading ion's concentration in the surface layer (101) up to a depth d may be at least 10% lower than at a depth of 1µm , without significantly modifying the initial CS and DOL values. All depth are measured starting from the substrate surface.

In particular CS and DOL values after ion implantation are not more than 5% lower than the initial CS and DOL values.

For the purpose of the present invention, the invading ion's concentration in the glass was determined by secondary ion mass spectroscopy (SIMS). The ion concentration is the SIMS intensity ratio of the invading ion and of silicon as explained in further detail below.

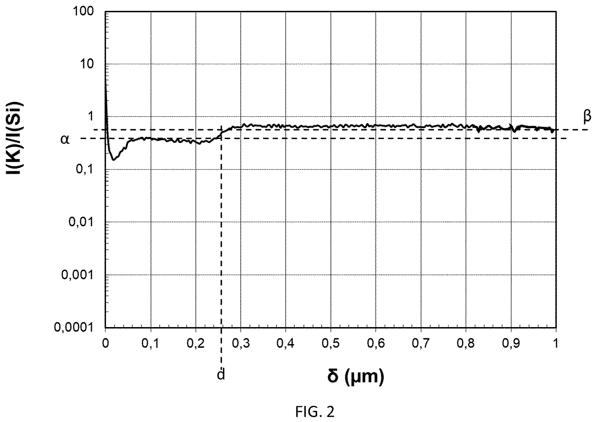

Figure 2 shows the depth profile of the potassium/silicon SIMS intensity ratio of a chemically strengthened, then implanted glass substrate versus the depth δ. A typical, non-implanted, chemically strengthened glass substrate shows a steadily decreasing K/Si SIMS intensity ratio as one progresses from the surface towards the bulk if the substrate. As can be seen in this example embodiment of the present invention, a surface layer up to a depth d with a K/Si SIMS intensity ratio of at most α formed, wherein α < β, β being the K/Si SIMS intensity ratio at a depth of 1µm.

Glass substrates suitable for use in connection with the present invention include in particular flat, sheet-like glass substrates, having two major opposed surfaces and having a composition capable of being strengthened by chemical strengthening.

Specific examples thereof include soda-lime silicate glass, alumino-silicate glass, borate glass, lithium alumino-silicate glass, borosilicate glass, and alkali-free glass, and transparent glass plates formed of various other kinds of glass. Soda-lime glass and alumino-silicate glass is particularly often used.

Among them, glass containing alkali metal ions or alkali earth metal ions, that have smaller ion radius, is preferred, and glass containing Na⁺ ions is more preferred. A glass substrate containing Na⁺ ions is capable of being subjected to ion exchange with alkali metal ions having ion radius larger than Na⁺, for example K⁺ ions. The Na⁺ ions can thus be effectively replaced to thereby strengthen the glass, even when the glass substrate has a temporary thin film formed on a surface thereof.

The composition of the glass substrate for chemical strengthening according to the present invention is not particularly limited, other than by the fact that it should permit ion exchange. For example, the following glass compositions may be used.

Preferably, the composition of the glass substrate of the invention is boron- and lithium-free. This means that the elements boron and lithium are not intentionally added in the glass batch/raw materials and that, if present, their content in the composition of the glass sheet reaches only level of an impurity unavoidably included in the production.

In an embodiment, the composition of the glass substrate comprises the following in weight percentage, expressed with respect to the total weight of glass:

| | |
|---|---|
| SiO₂ | 55 - 78% |
| Al₂O₃ | 0 - 18% |
| B₂O₃ | 0 - 18% |
| Na₂O | >0 - 20% |
| CaO | 0 - 15% |
| MgO | 0 - 10% |
| K₂O | 0 - 10% |
| BaO | 0 - 5% |

Advantageously, notably for low production costs reasons, the composition of the glass substrate is a soda-lime-silicate glass. According to this embodiment, the composition of the glass substrate comprises the following in weight percentage, expressed with respect to the total weight of glass :

| | |
|---|---|
| SiO₂ | 60 - 78% |
| Al₂O₃ | 0 - 8% |
| B₂O₃ | 0 - 4% |
| CaO | 0 - 15% |
| MgO | 0 - 10% |
| Na₂O | 5 - 20% |
| K₂O | 0 - 10% |
| BaO | 0 - 5%. |

Preferably, the composition of the glass substrate comprises the following in weight percentage, expressed with respect to the total weight of glass :

| | |
|---|---|
| SiO₂ | 60 - 78% |
| Al₂O₃ | 0 - 6% |
| B₂O₃ | 0 - 1 % |
| CaO | 5 - 15% |
| MgO | 0 - 8% |
| Na₂O | 10 - 20% |
| K₂O | 0 - 5% |
| BaO | 0 - 1%. |

Preferably the chemically strengthened glass substrate has, before and after ion implantation, on both opposed surfaces CS values of at least 400 MPa and DOL values of at least 6 µm. CS values are preferably comprised between 400 MPa and 1200 MPa, DOL values are preferably comprised between 6 µm and 40 µm. Preferably the chemically strengthened glass substrate has a thickness comprised between 0.1 mm and 3 mm. When the glass substrate is soda lime glass sheet, the two opposed surfaces' CS values are preferably at least 400 MPa at DOL values of at least 8 µm, before and after ion implantation. When the glass substrates are aluminosilicate glass sheets the CS values are preferably at least 650 MPa and the DOL values at least 16 µm, before and after ion implantation.

Preferably the chemical strengthening is performed in a bath of molten salt, preferably comprising KNO₃, at a temperature between 400°C and 500 °C for a duration of 20 minutes to 24 hours.

The chemical strengthening process may be performed, for example by immersing the glass substrate in bath of molten potassium nitrate KNO₃ at a temperature between 400°C and 500° C for 20 minutes to 24 hours. As will be appreciated by those skilled in the art, various process parameters of the ion exchange can be selected by taking into consideration the composition and thickness of the glass, the molten salt used, and the stress profile required for the final use of the chemically strengthened glass.

In another preferred embodiment of the present invention the chemical strengthening is performed by immersing the glass substrate in bath of molten potassium nitrate at a temperature between 400°C and 500° C for 24 hours to 48 hours.

The invention proposes a method for treating a glass substrate by subjecting an area of the glass substrate to an ion beam so as to implant ions of the beam up to a certain depth D into the glass substrate, creating a three dimensional implantation zone, wherein
a. the positively charged ions are generated by an ion source which produces simultaneously single charge and multicharge ions. Multicharge ions are ions carrying more than one positive charge, single charge ions carry one single positive charge. One such ion source is for example an Electron Cyclotron Resonance (ECR) ion source,
b. the ions of the beam are selected from the ions of Ar, N, He, O, Ne, Kr, Xe, preferably form the ions of Ar, N, O and He. The single charge and multicharge ions generated simultaneously by the ion source make up the ions of the beam,
c. the ion acceleration voltage is set at a value comprised between 5 and 100 kV,
d. the beam power is set at a value comprised between 1W and 500W, and
e. the ion dosage per surface unit is set at a value comprised between 10¹⁴ ions/cm² and 10¹⁸ ions/cm², preferably between 10¹⁵ ions/cm² and 10¹⁸ ions/cm².

In one embodiment of the invention the ion beam comprises Ar⁺, Ar²⁺, Ar³⁺, Ar⁴⁺, and Ar⁵⁺. While the present invention may use an ion beam comprising varying amounts of the different Ar ions, example intensities of the respective Ar ions are shown in the Table 1 below.

**Table 1**

| | Example intensity |
|---|---|
| Ar⁺ | 2 mA |
| Ar²⁺ | 1.29 mA |
| Ar³⁺ | 0.60 mA |
| Ar⁴⁺ | 0.22 mA |
| Ar⁵⁺ | 0.11 mA |

In another embodiment of the invention the ion beam comprises N⁺, N²⁺, and N³⁺. While the present invention may use an ion beam comprising various amounts of the different N ions, example intensities of the respective N ions are shown in Table 2 below.

**Table 2**

| | Example intensities |
|---|---|
| N⁺ | 0.55 mA |
| N²⁺ | 0.60 mA |
| N³⁺ | 0.24 mA |

In another embodiment of the invention the ion beam comprises He⁺, and He²⁺. While the present invention may use an ion beam comprising various amounts of the different He ions, example intensities of the respective He ions are shown in Table 3 below.

**Table 3**

| | Example intensities |
|---|---|
| He⁺ | 1.35 mA |
| He²⁺ | 0.15 mA |

The accelerator voltage and beam power as well as the dose of ions per unit of surface area are chosen to allow the implantation of ions from the beam into an implantation zone having a depth D of between 0.1µm and 1µm, preferably between 0.1µm and 0.5µm.

For a fixed acceleration voltage, every differently charged ion will have a different energy. For example in an ion beam comprising Ar⁺, Ar²⁺, Ar³⁺, Ar⁴⁺, and Ar⁵⁺ and an acceleration voltage of 35 kV, Ar⁺, Ar²⁺, Ar³⁺, Ar⁴⁺, and Ar⁵⁺ ions will have an energy respectively of 35 keV, 70 keV, 105 keV, 140 keV, and 175 keV (kilo-electron-volt). The maximum implantation depth will increase from the least energetic ion (Ar⁺) to the most energetic ion (Ar⁵⁺).

Because of their higher energy ions carrying a higher charge will be implanted deeper into a substrate than ions carrying a lower charge. Therefore, for a given total ion dosage, a narrow depth distribution is obtained when only simple charge ions are implanted and a wider depth distribution is obtained when simple charge and multicharge ions are implanted simultaneously.

In a preferred embodiment of the present invention the temperature of the area of the chemically strengthened glass substrate being implanted, situated under the area being treated is less than or equal to the glass transition temperature of the glass substrate. This temperature is for example influenced by the intensities of the ions in the beam, by the residence time of the treated area in the beam and by any cooling means of the substrate.

In one embodiment of the invention chemically strengthened glass substrate and ion beam are displaced relative to each other so as to progressively treat the glass substrate. Preferably they are displaced relative to each other at a speed VD comprised between 0.1 mm/s and 1000 mm/s. VD is chosen in an appropriate way to control the residence time of the sample in the beam which influences ion dosage and temperature of the area being treated.

In one embodiment the chemically strengthened glass substrate sheet is at least implanted on part of one or both of its surfaces.

In one embodiment the chemically strengthened glass substrate sheet is at least treated on the entirety of one or both of its surfaces.

In one embodiment of the invention the total dosage of ions per surface unit of an area of the chemically strengthened glass substrate is obtained by a single treatment by the ion beam.

In another embodiment of the invention the total dosage of ions per surface unit of an area of the chemically strengthened glass substrate is obtained by a several consecutive treatments by the ion beam.

In one embodiment of the invention several, at least two, ion beams are used simultaneously or consecutively to treat the chemically strengthened glass substrate.

It is thus possible to reduce the invading ions surface layer concentration by introducing a certain dosage of the selected ions to a significant depth in the glass substrate and at the same time it is also possible to obtain modified surface properties such as increased scratch resistance and/or lowered reflectance.

According to an embodiment of the present invention the positively charged implanted ions comprise a mixture of single and/or multiple charged ions.

The implantation of ions according to the present invention is preferably performed in a vacuum chamber at a pressure comprised between 10⁻⁷ mbar and 10⁻² mbar, more preferably at a pressure comprised between 5 × 10⁻⁵ mbar and 2 × 10⁻⁶ mbar.

An example ion source for carrying out the method of the present invention is the Hardion+ ECR ion source from Ionics SA.

The present invention also concerns the use of a mixture of single charge and multicharge ions of N, H, O, He, Ne, Ar, or Kr to reduce the surface layer concentration of the invading ion in a chemically strengthened glass substrate, the mixture of single charge and multicharge ions being implanted in the glass substrate with an ion dosage and acceleration voltage effective to reduce the reference reflectance of the glass substrate.

Advantageously the implantation depth d of the ions may be comprised between 0.11 µm and 1 µm, preferably between 0.15 µm and 0.5 µm. The implanted ions are spread between the substrate surface and the implantation depth. The implantation depth may be adapted by the choice of implanted ion, by the acceleration energy and varies to a certain degree depending on the substrate.

According to the present invention, the mixture of single charge and multicharge ions of O or N preferably comprises, O⁺ and O²⁺ or N⁺, N²⁺ and N³⁺ respectively.

According to a preferred embodiment of the present invention, mixture of single charge and multicharge ions of O comprises a lesser amount of O²⁺ than of O⁺. In a more preferred embodiment of the present invention the mixture of single charge and multicharge ions of O comprises 55-98% of O⁺ and, 2-45% of O²⁺.

According to another preferred embodiment of the present invention, mixture of single charge and multicharge ions of N comprises a lesser amount of N³⁺ than of N⁺ and of N²⁺each. In a more preferred embodiment of the present invention the mixture of single charge and multicharge ions of N comprises 40-70% of N⁺, 20-40% of N²⁺, and 2-20% of N³⁺.

According to another preferred embodiment, the glass sheet of the invention is a glass sheet formed by a slot draw process or by a fusion process, in particular the overflow downdraw fusion process. These processes, in particular the fusion process produces glass sheets whose surfaces may reach superior flatness and smoothness necessary in some applications, but they are also more expensive than the float process for large scale glass production.

The substrate according to the invention may have a thickness of from 0.1 to 25 mm. Advantageously, in the case of display applications, the glass sheet according to the invention has preferably a thickness of from 0.1 to 6 mm. More preferably, in the case of display applications and for reasons of weight, the thickness of the glass sheet according to the invention is of from 0.1 to 2.2 mm.

In certain applications the substrate according to the invention may have a thickness of from 10 µm to 100 µm, advantageously from 50 µm to 100 µm.

Embodiments of the invention will now be further described, by way of examples only, together with some comparative examples, not in accordance with the invention. The following examples are provided for illustrative purposes, and are not intended to limit the scope of this invention.

The person skilled in the art realizes that the present invention by no means is limited to the preferred embodiments described above. On the contrary, many modifications and variations are possible within the scope of the appended claims.

### Examples

Table 4 below shows details on the substrates, the chemical strengthening parameters and the initial CS and DOL values before ion implantation of the chemically strengthened glass substrates used to prepare the first chemically strengthened, then implanted glass substrates of the present invention.

**Table 4**

| | Substrate | | chemical strengthening parameters | | initial CS and DOL | |
|---|---|---|---|---|---|---|
| | glass type | thickness [mm] | Duration [h] | temperature [°C] | CSᵢ [MPa] | DOLᵢ [µm] |
| Ex1 | soda lime | 0.55 | 1.5-3 | 440-480 | 563 | 11.8 |
| Ex2 | Aluminosilicate 1 | 0.55 | 1.5-3 | 380-420 | 738 | 25.2 |
| Ex3 | Aluminosilicate 1 | 0.55 | 1.5-3 | 440-480 | 636 | 49.9 |
| Ex4 | Aluminosilicate 2 | 0.50 | 1.5-3 | 440-480 | 610 | 25.7 |
| Ex5 | Aluminosilicate 2 | 0.50 | 7-98 | 380-420 | 807 | 22.2 |
| Ex6, 6', 6" | Aluminosilicate 3 | 0.50 | | | 944 | 32.8 |

In the implantation zone of a glass substrate, the depth distribution profile of the invading ion in the glass was determined by secondary ion mass spectroscopy (SIMS). The SIMS depth distribution profiles were carried out on a Cameca imsf-4 instrument. The sputter erosion conditions are: primary beam 5.5keV Cs+, current density 0.16 mA/cm²; sputtered area 125 × 125 µm². The analyzed area has a diameter of 60 µm. MCs+ ions are detected, where M stands for the element to be detected. The detection intensity signal I(M) for each element M versus the sputtering time is recorded at predetermined time intervals, leading to an intensity profile for this element versus a time scale. The depth scale is obtained by measuring the total depth of the crater obtained after the sputter erosion using a step profiler after the SIMS measurement. The time scale is converted into a depth scale assuming a constant sputtering rate. Any signal due to surface contamination is to be ignored.

For each sample (implanted and non-implanted as reference) the profile of the depth distribution (µm) of the intensity I(CsM) of the MCs+ ions, normalized with respect to isotope ratio and Cs-intensity is calculated. A semi-quantification of the invading ion's M concentration profile is obtained by calculating the ratios of I(CsM)/I(CsSi). For the purpose of the present invention the intensity ratio I(CsM)/I(CsSi) is calculated from the intensity signal I(CsM) of MCs+ for the invading ion M, and from the intensity signal I(CsSi) of SiCs+ for silicon, where the silicon isotope detected is ²⁸Si. In particular, when the invading ion M is potassium K, the intensity ratio I(CsK)/I(CsSi) is calculated, the potassium isotope detected is ³⁹K.

The ion implantation examples were prepared according to the various parameters detailed in the tables below using an ECR ion source for generating a beam of a mixture of single charge and multicharge ions. The ion source used was a Hardion+ ECR ion source from Ionics S.A.

All samples had a size of about 100 cm² and were treated on the entire surface by displacing the substrate through the ion beam at a speed selected between 10 and 100 mm/s.

The temperature of the area of the substrate being treated was kept at a temperature less than or equal to the melting temperature of the substrate.

For all examples the implantation was performed in a vacuum chamber at a pressure of 10⁻⁶ mbar.

Using the ECR ion source, and a N₂ source gas, ions of N were implanted in the chemically strengthened substrates.

**Table 5**

| | implantation parameters | | final CS and DOL | |
|---|---|---|---|---|
| | Acceleration Voltage [kV] | Dose [ions/cm²] | CS_{f} [MPa] | DOL_{f} [µm] |
| Ex1 | 35 | 10¹⁶ | 559 | 11.8 |
| Ex2 | 35 | 10¹⁶ | 734 | 27.2 |
| Ex3 | 35 | 10¹⁶ | 656 | 53.7 |
| Ex4 | 35 | 10¹⁶ | 609 | 25.8 |
| Ex5 | 35 | 10¹⁶ | 822 | 22.4 |
| Ex6 | 20 | 7 × 10¹⁶ | 947 | 32.8 |
| Ex6' | 20 | 8 × 10¹⁶ | 946 | 32.7 |
| Ex6" | 20 | 9 × 10¹⁶ | 947 | 32.6 |

For each sample 1 to 6" according to the present invention the invading ion concentration in the surface layer was at least 10% lower than the invading ion concentration at a depth of 1µm.

As can be seen from table 5 above, the implantation of ions of N leads to very little change in CS and DOL values of the chemically strengthened glass substrates.

Table 6 below shows the scratch resistance of the samples before and after the ion implantation.

Scratch resistance of the glass substrates was determined by a progressive load scratch test. This test corresponds to a load ramp applied during a defined displacement of the sample beneath it. Here measurements were performed with a microscratch tester "MicroCombi tester" from CSM Instruments. The scratch test consists in moving a diamond stylus that is placed on the substrate surface along a specified line under a linearly increasing normal force and with a constant speed. For glass samples of soda-lime type the scratches were made with a Rockwell diamond indenter with a radius of 200 µm (200 µm tip). For glass samples of aluminosilicate type the scratches were made with a Rockwell diamond indenter with a radius of 100 µm (100 µm tip).

The stylus was moved along a straight line of 1.5 cm in length. The speed was kept constant at 5 mm/min. The normal force (load) applied on the stylus was increased from 0.03 N at the start of the scratch to 30 N at the end of the scratch. During the scratch, the penetration depth, the acoustic emission and the tangential force are recorded and the aspect of the scratch is observed as a function of the penetration depth.

The load applied on the stylus when the first cracks appear at the glass surface is the critical load with 100 µm tip radius of the Rockwell diamond indenter used.

For each sample the average of at least three measurements is determined. The higher the scratch resistance the higher the load at which the first cracks appear.

On the equipment used for the present experiments the maximum possible load was limited to 30 N.

On samples with a very high scratch resistance no cracks appear even when the maximum load is applied to the stylus.

Table 6 below shows the scratch resistance of the samples before and after the ion implantation.

**Table 6**

| | Critical load CL with 100µm tip [N] | |
|---|---|---|
| | Initial CLᵢ | Final Cl_{f} |
| Ex1 | 8.9 | 9.1 |
| Ex2 | 9.6 | 12.0 |
| Ex3 | 11.0 | 16.7 |
| Ex4 | 10.6 | 13.1 |
| Ex5 | 11.0 | 13.6 |
| Ex6 | 12.1 | 13.6 |

As can be seen from table 6 above, the scratch resistance is further improved after implanting the already very scratch resistant chemically strengthened glass substrates.

Indeed it was found that, in addition to reducing the potassium surface layer concentration, implanting chemically strengthened glass substrates with ions using an acceleration voltage of 10 to 50 kV and a dose in the range from 10¹⁵ to 5 × 10¹⁶ ions/cm² led to an increase in scratch resistance.

It was also found that, in addition to reducing the potassium surface layer concentration, implanting chemically strengthened glass substrates with ions using an acceleration voltage of 15 to 40 kV and a dose in the range from 4 × 10¹⁶ to 7.5 × 10¹⁷ ions/cm² led to an decrease of visible reflectance.

## Claims

1. Use of implanted ions to decrease the invading ion concentration in a surface layer of a chemically strengthened glass, wherein
a. the ions are selected from one or more of the ions of N, H, O, He, Ne, Ar, and Kr,
b. are implanted in the substrate with a dosage comprised between 1014 ions/cm² and 10¹⁸ ions/cm², and an acceleration voltage comprised between 5 kV and 100 kV,
c. the invading ion is K⁺, and
d. the surface layer starts at the substrate surface and reaches down to a depth d, where 100 nm < d < 900nm.

2. Use of implanted ions to decrease the invading ion concentration in a surface layer of a chemically strengthened glass according to any one preceding claim, wherein α, the invading ion concentration in the surface layer, is not more than 90% of β, the invading ion concentration in the substrate at a depth of 1 µm, where 100 nm < d < 900 nm, where the invading ion concentration is expressed as the invading ion to silicon signal intensity ratio in a SIMS profile.

3. Use of implanted ions to decrease the invading ion concentration in a surface layer of a chemically strengthened glass according to any one preceding claim, wherein the chemically strengthened glass is soda lime glass or aluminosilicate glass.

## Patentansprüche

1. Verwendung von implantierten Ionen zur Verringerung der Konzentration von eindringenden Ionen in einer Oberflächenschicht eines chemisch vorgespannten Glases, wobei
a. die Ionen aus einem oder mehreren der Ionen von N, H, O, He, Ne, Ar und Kr ausgewählt sind,
b. in dem Substrat mit einer Dosierung zwischen 10¹⁴ Ionen/cm² und 10¹⁸ Ionen/cm² und einer Beschleunigungsspannung zwischen 5 kV und 100 kV implantiert werden,
c. es sich bei dem eindringenden Ion um K⁺ handelt und
d. die Oberflächenschicht an der Substratoberfläche beginnt und bis zu einer Tiefe d hinabreicht, wobei 100 nm < d < 900 nm.

2. Verwendung von implantierten Ionen zur Verringerung der Konzentration von eindringenden Ionen in einer Oberflächenschicht eines chemisch vorgespannten Glases nach einem der vorhergehenden Ansprüche, wobei α, die Konzentration von eindringenden Ionen in der Oberflächenschicht, nicht mehr als 90 % von β, der Konzentration von eindringenden Ionen in dem Substrat in einer Tiefe von 1 µm beträgt, wobei 100 nm < d < 900 nm, wobei die Konzentration von eindringenden Ionen als das Signalintensitätsverhältnis von eindringendem Ion zu Silicium in einem SIMS-Profil ausgedrückt wird.

3. Verwendung von implantierten Ionen zur Verringerung der Konzentration von eindringenden Ionen in einer Oberflächenschicht eines chemisch vorgespannten Glases nach einem der vorhergehenden Ansprüche, wobei es sich bei dem chemisch vorgespannten Glas um Kalknatronglas oder Aluminosilikatglas handelt.

## Revendications

1. Utilisation d'ions implantés pour diminuer la concentration en ion envahissant dans une couche de surface d'un verre renforcé chimiquement,
a. les ions étant choisis parmi un ou plusieurs des ions parmi N, H, O, He, Ne, Ar et Kr,
b. étant implantés dans le substrat avec un dosage compris entre 10¹⁴ ions/cm² et 10¹⁸ ions/cm², et une tension d'accélération comprise entre 5 kV et 100 kV,
c. l'ion envahissant étant K⁺, et
d. la couche de surface commençant au niveau de la surface du substrat et atteignant vers le bas une profondeur d, où 100 nm < d < 900 nm.

2. Utilisation d'ions implantés pour diminuer la concentration en ion envahissant dans une couche de surface d'un verre renforcé chimiquement selon une quelconque revendication précédente, α, la concentration en ion envahissant dans la couche de surface, n'étant pas supérieure à 90 % de β, la concentration en ion envahissant dans le substrat à une profondeur de 1 µm, où 100 nm < d < 900 nm, où la concentration en ion envahissant est exprimée comme le rapport d'intensité de signal d'ion envahissant sur silicium dans un profil SIMS.

3. Utilisation d'ions implantés pour diminuer la concentration en ion envahissant dans une couche de surface d'un verre renforcé chimiquement selon une quelconque revendication précédente, le verre renforcé chimiquement étant un verre sodo-calcique ou un verre d'aluminosilicate.
